(19) Europäisches Patentamt
European Patent Office
Office européen des brevets

(11) **EP 1 426 564 B1**

(12) **EUROPÄISCHE PATENTSCHRIFT**

(45) Veröffentlichungstag und Bekanntmachung des Hinweises auf die Patenterteilung:
**30.12.2009   Patentblatt 2009/53**

(51) Int Cl.:
*F01K 17/02* *(2006.01)*     *F24D 10/00* *(2006.01)*

(21) Anmeldenummer: **02026036.0**

(22) Anmeldetag: **21.11.2002**

(54) **Verfahren und Vorrichtung zur Regelung der Leistung eines kraft-wärme-gekoppelten Kraftwerks**

Method and device for controlling the output of a combined heat and power plant

Procédé et dispositif pour la régulation de la puissance d' une centrale thermique à cycle combiné

(84) Benannte Vertragsstaaten:
**AT BE BG CH CY CZ DE DK EE ES FI FR GB GR IE IT LI LU MC NL PT SE SK TR**

(43) Veröffentlichungstag der Anmeldung:
**09.06.2004   Patentblatt 2004/24**

(73) Patentinhaber: **SIEMENS AKTIENGESELLSCHAFT
80333 München (DE)**

(72) Erfinder:
• **Hüngerle, Manfred
  68782 Brühl (DE)**
• **Meerbeck, Bernhard, Dr.
  63075 Offenbach (DE)**

(56) Entgegenhaltungen:
**EP-A- 0 286 377      EP-B- 0 297 718
EP-B- 0 663 575      DE-A- 3 336 596
DE-A- 3 841 224      DE-A- 10 003 914
DE-A- 19 517 053      DE-A- 19 621 247
DE-A- 19 859 364      DE-C- 19 602 330**

**Beschreibung**

Die Erfindung betrifft ein Verfahren sowie eine Vorrichtung zur Regelung eines kraft-wärme-gekoppelten Kraftwerks.

Bei vielen bekannten Kraftwerken wird eine vorhandene Einrichtung zur Dampferzeugung sowie eine Dampfturbine zusätzlich zur Erzeugung von elektrischer Energie auch zur Erzeugung von sogenannter Fernwärme benutzt, wobei teilentspannter Dampf, welcher noch genügend Energie zur Aufheizung eines aufzuheizenden Mediums besitzt, der Dampfturbine entnommen und einem oder mehreren Heizkondensatoren primärseitig als Heizmedium zugeführt wird. Sekundärseitig werden derartige Heizkondensatoren vom aufzuheizenden Medium, beispielsweise Wasser, durchströmt, welches mittels des Heizmediums aufgeheizt und Wärmeverbrauchern zugeführt wird.

Auf diese Weise ist es möglich, die Energieerzeugung des Kraftwerks sowohl für die Erzeugung von elektrischer Energie als auch von Fernwärme, beispielsweise zu Heizzwecken, einzusetzen, wobei sich in der Regel ein guter Gesamtwirkungsgrad erzielen lässt.

Beachtet werden muss dabei, dass in Folge der Fernwärmeauskopplung ein Teil der Wärmeenergie des Prozessdampfes nicht mehr für die Erzeugung von elektrischer Energie zur Verfügung steht. Wenn nun das Kraftwerk eine angeforderte Menge an elektrischer Leistung zur Verfügung stellen soll, die beispielsweise in Form eines Lastfahrplans von einer übergeordneten Leitzentrale vorgegeben wird, so muss bei der Regelung der Dampferzeugung des Kraftwerks neben der geforderten elektrischen Leistung auch derjenige Leistungsanteil berücksichtigt werden, welcher zur Erzeugung der Fernwärme benötigt wird und welcher, wie bereits erwähnt, nicht zur Erzeugung von elektrischer Energie zur Verfügung steht.

Dies bedeutet, dass beispielsweise eine Regelungseinrichtung eines Dampferzeugers des Kraftwerks mit einem größeren Leistungssollwert beaufschlagt wird, als es allein zur Erzeugung von elektrischer Energie nötig wäre.

Derjenige Anteil an Leistung, welcher auf die Fernwärmeauskopplung entfällt, wird als so genannte elektrische Minderleistung bezeichnet, welche zur (geforderten) elektrischen Leistung des Kraftwerks zu addieren und als entsprechender Leistungssollwert einem Leistungsregler des Kraftwerke zuzuführen ist.

Bekannte Verfahren und Vorrichtungen zur Bestimmung der oben genannten elektrischen Minderleistung machen meist von empirisch gefundenen Zusammenhängen Gebrauch, wobei z.B. der Druck, mittels welcher die Turbinenschaufeln einer Hochdruckstufe der Dampfturbine beaufschlagt sind, herangezogen wird. Andere Einflüsse, wie beispielsweise eine variierende, insbesondere höhere, Kühlwassertemperatur oder Abschaltungen von Vorwärmern, können dabei oft nicht berücksichtigt werden.

DE 33 36 596 A1 beschreibt ein Verfahren und eine Vorrichtung zum Regeln eines Kraftwerkblockes gemäß dem Oberbegriff der Ansprüche 1 und 5, bei dem bzw. der zur Regelung eines Dampferzeugers die Heizleitung gemessen wird (Zusammenfassung). In der Beschreibungseinleitung auf Seite 3, Zeilen 19 bis 23 wird in der DE 33 36 596 A1 erwähnt, dass die Heizleistung auf Basis von Messungen der aufgeheizten Wassermenge und deren Vorlauf- und Rücklauftemperaturen berechnet werden kann. Dieses Verfahren erfüllt jedoch nicht die Kriterien der Einfachheit, Genauigkeit und Zuverlässigkeit. Daher wird in der DE 33 36 596 A1 vorgeschlagen, die Heizleistung aus dem Verhältnis zwischen dem Dampfdruck am Turbineneingang einer Kondensationsturbine und der elektrischen Leistung zu berechnen (Seite 3, Zeilen 19 bis 37).

DE 196 21 247 A1 beschreibt ein Verfahren zur Wärmemengenregelung in Fernwärme-Übergabestationen; bei dem die Wärmemenge durch Multiplikation der Temperaturdifferenz zwischen Fernwärmevor- und -rücklauf mit dem gemessenen Wärmekapazitätsstrom (Durchflussmenge x spezifische Wärmekapazität) ermittelt wird (Spalte 2, Zeilen 6 bis 10).

Zusammengefasst lässt sich feststellen, dass zur Bestimmung der elektrischen Minderleistung im Stand der Technik in starkem Maß die Dampfturbine betreffende Betriebsparameter herangezogen werden, so dass insbesondere eine für ein bestimmtes Kraftwerk gefundene Ermittlungsmethode der elektrischen Minderleistung nicht ohne Weiteres auf ein anderes Kraftwerk übertragen werden kann, weil die entsprechenden Betriebsparameter der jeweiligen Dampfturbinen sehr stark vom jeweiligen Typ der Dampfturbine abhängen und für eine Dampfturbine empirisch gefundene Zusammenhänge deshalb nicht ohne Weiteres auf eine andere Dampfturbine übertragen werden können.

Der Erfindung liegt daher die Aufgabe zugrunde, ein verbessertes Verfahren sowie eine Vorrichtung zur Leistungs-Regelung.eines kraft-wärme-gekoppelten Kraftwerks anzugeben, mittels welcher in einfacher Weise insbesondere die elektrische Minderleistung bestimmt und berücksichtigt werden kann.

Dabei soll das erfindungsgemäße Verfahren sowie die Vorrichtung ohne besondere Schwierigkeiten bei einer Vielzahl an Kraftwerken anwendbar serin.

Bezüglich des Verfahrens und der Vorrichtung wird die Aufgabe erfindungsgemäß gelöst durch ein Verfahren und eine Vorrichtung gemäß den Patentansprüchen 1 bzw. 5.

Bevorzugte Ausführungsformen sind den davon jeweils abhängigen Unteransprüchen zu entnehmen.

Ein wesentlicher Vorteil des erfindungsgemäßen Verfahren sowie der Vorrichtung ist darin zu sehen, dass zur Bestimmung des zweiten Leistungssollwerts (=elektrische Minderleistung) lediglich Messungen im Bereich der Fernwärme nötig sind und keine turbinenspezifischen Einflussparameter und Messgrößen ermittelt und in Betracht gezogen werden müssen.

So müssen zur Bestimmung des zweiten Sollwerts nur der oder die Massenströme des aufzuheizenden Mediums durch den oder die Heizkondensatoren, sowie die Vor- und Rücklauftemperatur des aufzuheizenden Mediums bezüglich jedes Heizkondensators ermittelt werden, beispielsweise durch Messungen. Da die genannten Größen bei vielen kraft-wärme-gekoppelten Kraftwerken sowieso erfasst und in einem vorhandenen Leitsystem verarbeitet werden, ist in sehr vielen Fällen kein zusätzlicher Aufwand für die Ermittlung der besagten Größen notwendig.

Um die Berechnung der elektrischen Minderleistung besonders einfach durchführen zu können, werden bevorzugt die folgenden vereinfachenden Annahmen getroffen:

- Die Auswirkungen der Fernwärmeauskopplung auf Temperaturen und Drücke in der oder den Turbinen können vernachlässigt werden.
- Die Lastabhängigkeit des Enthalpieprofils der Turbine(n) kann vernachlässigt werden.
- Die Auswirkungen auf das Berechnungsergebnis durch anfallende Nebenkondensate können vernachlässigt werden.

Der zweite Sollwert (elektrische Minderleistung) kann dann mittels folgender Formeln bestimmt werden:

$$\Delta P_G = \dot{m}_{Ent}(h_{Ent} - h_{Kond}) \cdot \varepsilon_T;$$

wobei:

$$\dot{m}_{Ent} = \frac{\dot{m}_{Heiz}(\vartheta_{VL} - \vartheta_{RL})}{\frac{h_{Ent}}{c_W} - \vartheta_{VL}} .$$

Mit:

$\dot{m}_{Ent}$ :   Heizdampfmassenstrom

$\dot{m}_{Heiz}$ :   Massenstrom des aufzuheizenden Mediums

$\vartheta_{vL}$ :   Vorlauftemperatur (Austrittstemperatur) des aufzuheizenden Mediums

$\vartheta_{RL}$ :   Rücklauftemperatur (Eintrittstemperatur) des aufzuheizenden Mediums

$h_{Ent}$ :   Heizdampf-Enthalpie $\left[\dfrac{kJ}{kg}\right]$

$h_{kond}$ :   Kondensat-Enthalpie $\left[\dfrac{kJ}{kg}\right]$

$C_w$ :   spezifische Wärmekapazität des aufzuheizenden Mediums $\left[\dfrac{kJ}{kg \cdot K}\right]$

$\varepsilon_T$ :   Turbinen-Ausnutzungsgrad

$\Delta P_G$ :   zweiter Sollwert (elektrische Minderleistung)

Eine grundlegende Idee des vorgeschlagenen Verfahrens besteht darin, den Heizdampfmassenstrom zu berechnen unter Zuhilfenahme von Größen im Bereich der Fernwärmeauskopplung, anstatt turbinenseitige Messungen vornehmen zu müssen.

Gemäß oben stehender Formeln ergibt sich der Heizdampfmassenstrom im Wesentlichen aus den Massenströmen des aufzuheizenden Mediums durch die Heizkondensatoren, sowie den dabei auftretenden Vorlauf- und Rücklauftemperaturen.

Die darüber hinaus auftretenden Größen der Heizdampf-Enthalpie, der Kondensat-Enthalpie, der spezifischen Wärmekapazität des aufzuheizenden Mediums sowie des Turbinen-Ausnutzungsgrads werden bevorzugt als konstant angenommen, da deren Werte im Wesentlichen bestimmt sind durch die Auslegung der Anlage und weniger von aktuellen Betriebsbedingungen.

Sind in einer Anlage mehrere Heizkondensatoren vorhanden, so sind obige Formeln für jeden Heizkondensator auszuwerten und die entsprechenden Ergebnisse für den zweiten Sollwert zu addieren.

Bei der Heizdampf-Enthalpie handelt es sich um den Energieinhalt pro kg an Heizdampf, welcher in einen Heizkondensator primärseitig eingespeist wird.

Die Kondensat-Enthalpie beschreibt den Energieinhalt pro kg an entspanntem Dampf, welcher eine Dampf-Turbine verlässt und in einen Kondensator eingespeist wird.

Die spezifische Wärmekapazität des aufzuheizenden Mediums ist eine Stoffeigenschaft dieses Mediums und kann für das jeweils verwendete aufzuheizende Medium (beispielsweise Wasser) einschlägigen Nachschlagewerken entnommen werden.

Der Turbinen-Ausnutzungsgrad ist im Wesentlichen bestimmt durch die Auslegung der Turbine für einen Nennbetrieb.

Im Folgenden werden zwei Ausführungsbeispiele der Erfindung näher dargestellt. Es zeigt:

FIG 1 eine erfindungsgemäße Vorrichtung zur Regelung der Leistung eines kraft-wärme-gekoppelten Kraftwerks und
FIG 2 eine bevorzugte Ausführungsform der Erfindung.

In der Figur ist eine Vorrichtung 1 zur Regelung der Leistung eines kraft-wärme-gekoppelten Kraftwerks 3 dargestellt. Das Kraftwerk 3 umfasst dabei einen Dampferzeuger 10, welcher beispielsweise als ein Abhitzekessel ausgebildet ist, welcher mittels Abgas 11 einer Gasturbine beheizt ist.

Weiterhin umfasst das Kraftwerk 3 eine Dampfturbine 5, welche mittels Betriebsdampf 40, welcher vom Dampferzeuger 10 als Frischdampf bereitgestellt ist, betrieben wird.

Die Dampfturbine 5 ist zur Erzeugung von elektrischer Energie an einen Generator G gekoppelt, mittels welchem elektrische Energie in ein Energieversorgungsnetz einspeisbar ist.

Nach Verrichtung von Arbeit in der Dampfturbine 5 verlässt entspannter Dampf 50 die Dampfturbine 5 und wird einem Kondensator 15 zugeführt; das sich dort ansammelnde Kondensat wird in nicht näher dargestellter Art und Weise einer Speisewasseraufbereitung des Kraftwerks 3 zugeführt.

Zur Erzeugung des Betriebsdampfs 40 für die Dampfturbine 5 ist im vorliegenden Ausführungsbeispiel ein Hochdruckverdampfer 12 vorgesehen, welcher im Dampferzeuger 10 an dessen heißen Ende angeordnet ist.

Da es sich bei dem Kraftwerk 3 um ein kraft-wärme-gekoppeltes Kraftwerk handelt, sind zur Erzeugung von Fernwärme Heizkondensatoren 20,21,22 vorgesehen, welche jeweils mit einem Heizdampfteilstrom 301,302,303 beheizt sind. Die Heizdampfteilströme 301,302,303 sind einem Strom an Heizdampf 30 entnommen, welcher wiederum der Dampfturbine 5 entnommen ist, beispielsweise nach einer Mitteldruckstufe der Dampfturbine 5. Die Heizdampfteilströme 301,302,303 können dabei der Dampfturbine 5 auch aus unterschiedlichen Dampfanzapfungen mit jeweils unterschiedlichem Energieinhalt entnommen sein.

Die Heizkondensatoren 20,21,22 sind jeweils von einem aufzuheizenden Medium durchströmt, welches an Wärmeverbraucher 201,202,203 Wärmeenergie abgibt, beispielsweise zu Heizzwecken.

Die durch den Dampferzeuger 10 bereit gestellte Dampfleistung wird also sowohl in elektrische, als auch in Wärmeenergie (Fernwärme) umgewandelt.

Die Bereitstellung einer benötigten Dampfleistung durch den Dampferzeuger 10 wird mittels einer Regelungseinrichtung des Dampferzeugers 10 bewerkstelligt, welche in der Figur nicht dargestellt ist; der Regelungseinrichtung muss zumindest ein Leistungssollwert zugeführt werden, ausgehend von welchem eine entsprechende Dampferzeugung stattfindet.

Im Falle des vorliegenden kraft-wärme-gekoppelten Kraftwerks 3 umfasst der Leistungssollwert einen ersten Sollwert (in der Zeichnung nicht dargestellt), welcher eine elektrische Leistung des Kraftwerks 3 umfasst, und einen zweiten Sollwert 60, welcher eine Fernwärmeleistung des Kraftwerks 3 umfasst.

Der erste Sollwert ergibt sich aus einer Leistungsanforderung an das Kraftwerk 3, wobei üblicherweise ein elektrischer Lastfahrplan durch eine Leitzentrale vorgegeben ist, beispielsweise für die nächsten 24 Stunden.

Der zweite Sollwert 60 bezieht sich auf die Fernwärmeleistung (elektrische Minderleistung) des Kraftwerks 3, welche mittels des Heizdampfs 30 bzw. der Heizdampfteilströme 301,302,303 und der Heizkondensatoren 20,21,22 bereitgestellt wird.

Bei der Vorgabe des Leistungssollwerts für die Regelungseinrichtung des Dampferzeugers 10 ist nun bezüglich des zweiten Sollwerts 60 eine Recheneinheit 52 vorgesehen, mittels welcher anhand von im Bereich der Fernwärmeauskopplung ermittelten Größen der zweite Sollwert 60 berechnet wird.

Dazu sind der Recheneinheit 52 mindestens Werte für die Massenströme 2013,2023,2033 des in den Sekundärkreisläufen der Heizkondensatoren 20,21,22 jeweils geführten aufzuheizenden Mediums, deren Vorlauftemperaturen 2011,2021,2031 sowie deren Rücklauftemperaturen 2012,2022,2032 zugeführt.

Die Massenströme und die genannten Vorlauf- und Rücklauftemperaturen können beispielsweise mittels Sensoren erfasst und als entsprechende Messwerte der Recheneinheit 52 zugeführt sein.

Die Bestimmung des zweiten Sollwerts 60 durch die Recheneinheit 52 geschieht vorteilhaft mittels der an früherer Stelle der Beschreibung genannten Formeln, wonach der Heizdampfmassenstrom des Heizdampfs 30 berechnet wird aus den Massenströmen des aufzuheizenden Mediums sowie den jeweils zugehörigen Vorlauf- und Rücklauftemperaturen.

Die weiteren in den Formeln auftretenden Größen der Heizdampf-Enthalpie 305, der Kondensat-Enthalpie 505, der spezifischen Wärmekapazität 307 des aufzuheizenden Mediums sowie des Turbinen-Ausnutzungsgrads 507 werden bevorzugt nicht gemessen, sondern entsprechend der Auslegung des Kraftwerks 3 als konstante Größen angenommen, welche insbesondere schon bekannt sind.

Beispielsweise kann der Wert für die spezifische Wärmekapazität $\dfrac{4,19\,\text{kJ}}{\text{kg K}}$ betragen (bei Verwendung von Wasser als aufzuheizendes Medium).

Der Turbinen-Ausnutzungsgrad 507 kann z.B. 85 % und die Kondensat-Enthalpie $\dfrac{2300\,\text{kJ}}{\text{kg}}$ betragen.

Die Werte für die Heizdampf-Enthalpie 305 der Heizkondensatoren 20,21,22 können beispielsweise wie folgt gegeben sein

Heizdampf-Enthalpie 305 des Heizkondensators 20: $\dfrac{3520kJ}{kg}$

Heizdampf-Enthalpie 305 des Heizkondensators 21: $\dfrac{2930kJ}{kg}$ und

Heizdampf-Enthalpie 305 des Heizkondensators 22: $\dfrac{2720kJ}{kg}$ .

Der mittels der Recheneinheit 52 ermittelte zweite Sollwert 60 wird zum ersten Sollwert addiert (dies kann beispielsweise ebenfalls mittels der Recheneinheit 52 geschehen) und der Regelungseinrichtung des Dampferzeugers 10 zugeführt.

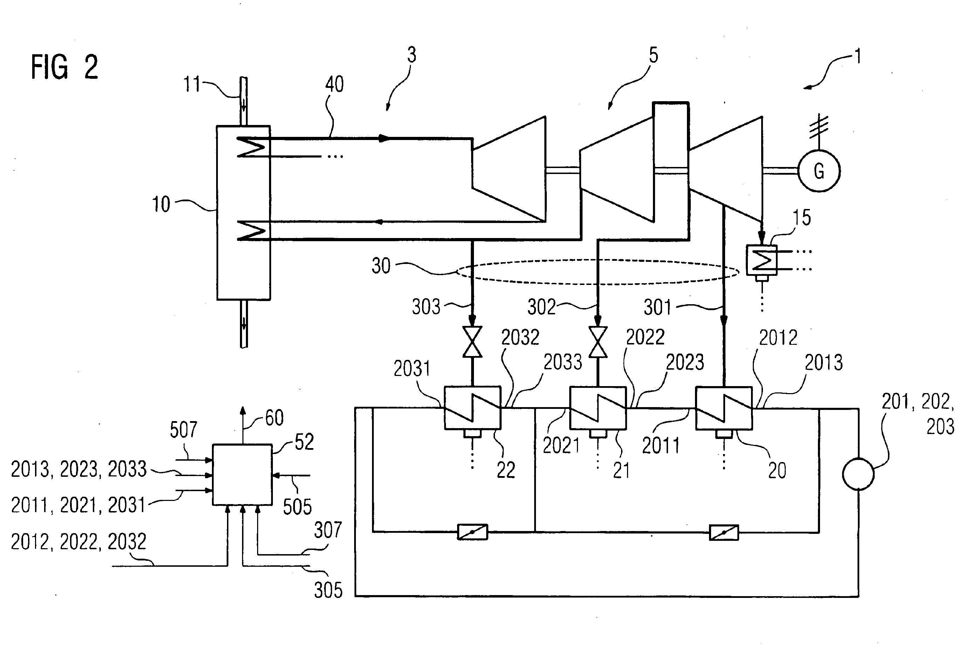

FIG 2 zeigt eine bevorzugte Ausführungsform der Erfindung.

Die Dampfturbine 5 des Kraftwerks 3 umfasst dabei drei Druckstufen, beispielsweise eine Hochdruck-, eine Mitteldruck- und eine Niederdruckstufe.

Heizdampf 30 zur Beheizung von Heizkondensatoren 20,21,22 ist dabei der Dampfturbine 5 an verschiedenen Anzapfungen entnommen, so dass Heizdampfteilströme 301,302,303 des Heizdampfs 30 ein zueinander unterschiedliches Energieniveau aufweisen.

Im Ausführungsbeispiel der FIG 2 wird dabei der Heizkondensator 20 mittels des Heizdampfteilstroms 301 beheizt, welcher sich im Vergleich zu den anderen Heizdampfteilströmen 302 und 303 auf einem niedrigeren Energieniveau befindet.

Die Heizkondensatoren 21 u. 22 sind dem Heizkondensator 20 in Reihe nachgeschaltet, so dass ein aufzuheizendes Medium die genannten Heizkondensatoren 20,21 u. 22 nacheinander durchströmt und mittels des jeweils nachgeordneten Heizkondensators auf ein höheres Temperaturniveau gebracht werden kann. Zur Einstellung einer jeweils gewünschten Temperatur des aufzuheizenden Mediums sind in die Versorgungsleitungen zwischen der Dampfturbine 5 und den Heizkondensatoren 21 u. 22 Ventile geschaltet, so dass die Heizdampfmenge, welche mittels der Heizdampfteilströme 302 u. 303 den jeweiligen Heizkondensatoren 21 u. 22 zugeführt wird, einstellbar ist.

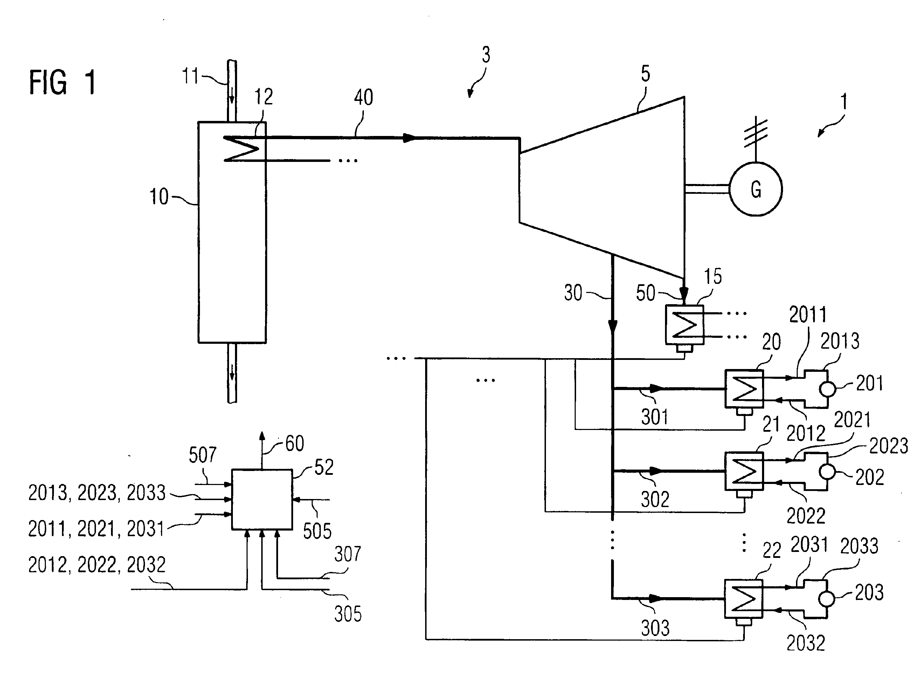

Die in FIG 1 gezeigten Vorlauftemperaturen 2011,2021 u. 2031 sowie die Rücklauftemperaturen 2012,2022 u. 2032 haben im Ausführungsbeispiel der FIG 2 die Bedeutung von Austritts- bzw. Eintrittstemperaturen des aufzuheizenden Mediums aus bzw. in die jeweiligen Heizkondensatoren.

Die im Zusammenhang mit FIG 1 beispielhaft angegebenen Werte für die Heizdampfenthalpien 305 der Heizkondensatoren 20,21 und 22 sind vorteilhaft für das Ausführungsbeispiel gemäß FIG 2 realisiert.

In den mittels der Heizkondensatoren 20,21 u. 22 gebildeten Wärmekreislauf können ein oder mehrere Wärmeverbraucher 201,202,203 geschaltet sein.

Im Ausführungsbeispiel der FIG 2 wird der Heizdampfteilstrom 303 nach einer Wärmetauscherfläche 42 gewonnen.

Bei der Kaskadenschaltung der Heizkondensatoren 20,21 u. 22 können weitere Steuerungselemente zur Einstellung gewünschter Teilströme des aufzuheizenden Mediums vorgesehen sein, beispielsweise Steuerungsklappen oder Ventile, oder auch Abzweigleitungen. Im Beispiel der FIG 2 ist dazu eine Steuerklappe vorgesehen, um einen Teilstrom des aufzuheizenden Mediums am Austritt des Heizkondensators 22 abzugreifen und über eine Abzweigleitung dem Eintritt dieses Heizkondensators zuzuführen und/oder den genannten Teilstrom über eine weitere Steuerklappe dem Eintritt des Heizkondensators 20 zuzuführen.

Neben der gezeigten Ausführung der Kaskadenschaltung bezüglich der Heizkondensatoren 20,21 u. 22 sind eine Reihe weiterer Variationen denkbar.

Die Funktion und Wirkungsweise der Recheneinheit 52 der FIG 2 entspricht derjenigen der FIG 1.

Zusammengefasst lässt sich die vorliegende Erfindung wie folgt umreißen:

Bei einem erfindungsgemäßen Verfahren sowie einer erfindungsgemäßen Vorrichtung zur Regelung der Leistung eines kraft-wärme-gekoppelten Kraftwerks wird derjenige Leistungsanteil, welcher auf die Auskopplung der Fernwärme entfällt, bestimmt unter Heranziehung eines Heizdampfmassenstroms, der unter Zuhilfenahme eines Massenstroms, einer Vorlauf- sowie einer Rücklauftemperatur des aufzuheizenden Mediums bezüglich des Heizkondensators, einer Heizdampf-Enthalpie und einer spezifischen Wärmekapazität des aufzuheizenden Mediums berechnet wird, sowie einer Kondensat-Enthalpie und eines Turbinen-Ausnutzungsgrads und der Heizdampf-Enthalpie.

Die Massenströme, sowie die Vorlauf- und Rücklauftemperaturen können auf einfache Weise im Bereich der Fernwärmeauskopplung bestimmt werden, so dass insbesondere aufwendige Messungen im Bereich einer Dampfturbine, mittels welcher die Heizkondensatoren mit Heizdampf versorgt sind, vermieden werden.

## Patentansprüche

1. Verfahren zur Regelung der Leistung eines kraft-wärme-gekoppelten Kraftwerks (3), wobei mindestens ein Leistungssollwert, mittels welchem mindestens eine Regelungseinrichtung eines Energieerzeugers, insbesondere eines Dampferzeugers (10), des kraft-wärme-gekoppelten Kraftwerks (3) beaufschlagt wird, ermittelt wird aus mindestens einem ersten Sollwert, welcher eine elektrische Leistung des Kraftwerks (1) umfasst, und einem zweiten Sollwert (60), welcher eine Fernwärmeleistung des Kraftwerks (3) umfasst und wobei das Kraftwerk (3) mindestens einen Heizkondensator (20,21,22) zur Erzeugung von Fernwärme umfasst, welcher sekundärseitig von einem aufzuheizenden Medium durchströmt wird,
**dadurch gekennzeichnet, dass** zur Ermittlung des zweiten Sollwerts (60) ein Heizdampfmassenstrom, der unter Zuhilfenahme eines Massenstroms (2013, 2023,2033), einer Vorlauf- (2011,2021,2031) sowie einer Rücklauftemperatur (2012,2022,2032) des aufzuheizenden Mediums bezüglich des Heizkondensators (20,21,22), einer Heizdampf-Enthalpie (305) und einer spezifischen Wärmekapazität (307) des aufzuheizenden Mediums berechnet wird, sowie eine Kondensat-Enthalpie (505) und ein Turbinen-Ausnutzungsgrad (507) und die Heizdampf-Enthalpie (305) herangezogen werden.

2. Verfahren nach Anspruch 1,
**dadurch gekennzeichnet, dass** der Heizkondensator (20,21,22) primärseitig mit Heizdampf (30) beheizt wird, welcher einer Dampfturbine (5) des Kraftwerks (3) entnommen wird, und dass das Kraftwerk (3) mindestens einen Kondensator (15) umfasst, in welchen entspannter Dampf (50), welcher die Dampfturbine (5) verlässt, gespeist wird.

3. Verfahren nach Anspruch 1 oder 2,
**dadurch gekennzeichnet, dass** zur Ermittlung des zweiten Sollwerts (60) die folgende Formel herangezogen wird:

$$\Delta P_G \;=\; \dot{m}_{Ent}(h_{Ent} - h_{Kond}) \cdot \varepsilon_T;$$

wobei

$$\dot{m}_{Ent} = \frac{\dot{m}_{Heiz}\,(\vartheta_{VL} - \vartheta_{RL})}{\dfrac{h_{Ent}}{c_W} - \vartheta_{VL}}\,,$$

und wobei $\dot{m}_{Ent}$ den Heizdampfmassenstrom darstellt, $\dot{m}_{Heiz}$ den Massenstrom des aufzuheizenden Mediums darstellt, $\vartheta_{VL}$ die
Vorlauftemperatur des aufzuheizenden Mediums darstellt, $\vartheta_{RL}$ die Rücklauftemperatur des aufzuheizenden Mediums darstellt, $h_{Ent}$ die Heizdampf-Enthalpie darstellt, $h_{Kond}$ die Kondensat-Enthalpie darstellt, $c_w$ die spezifische Wärmekapazität des aufzuheizenden Mediums darstellt, $\varepsilon_T$ den Turbinen-Ausnutzungsgrad darstellt, und $\Delta P_G$ den zweiten Sollwert darstellt.

4. Verfahren nach einem der Ansprüche 1 bis 3,
**dadurch gekennzeichnet, dass** die Heizdampf-Enthalpie, die Kondensat-Enthalpie, die spezifische Wärmekapazität des aufzuheizenden Mediums und der Turbinen-Ausnutzungsgrad als konstant angenommen werden.

5. Vorrichtung (1) zur Regelung der Leistung eines kraft-wärme-gekoppelten Kraftwerks (3), wobei mindestens ein Leistungssollwert, mittels welchem mindestens eine Regelungseinrichtung eines Energieerzeugers, insbesondere eines Dampferzeugers (10), des kraft-wärme-gekoppelten Kraftwerks (3) beaufschlagt ist, ermittelbar ist aus mindestens einem ersten Sollwert, welcher eine elektrische Leistung des Kraftwerks (3) umfasst, und einem zweiten Sollwert (60), welcher eine Fernwärmeleistung des Kraftwerks (3) umfasst und wobei das Kraftwerk (3) mindestens einen Heizkondensator (20,21,22) zur Erzeugung von Fernwärme umfasst, welcher sekundärseitig von einem aufzuheizenden Medium durchströmbar ist,
**gekennzeichnet durch**
eine Recheneinheit (52) zur Berechnung eines Heizdampfmassenstroms aus den Größen Massenstrom (2013, 2023,2033), Vorlauftemperatur (2011,2021,2031), Rücklauftemperatur (2012,2022,2032), Heizdampf-Enthalpie (305) und spezifische Wärmekapazität (307) des aufzuheizenden Mediums, die sich auf das **durch** den Heizkondensator (20,21,22) geführte, aufzuheizende Medium beziehen, und zur Ermittlung des zweiten Sollwertes (60) mindestens aus den Größen Heizdampfmassenstrom, Kondensat-Enthalpie (505), Turbinen-Ausnutzungsgrad (507) und der Heizdampf-Enthalpie (305).

6. Vorrichtung (1) nach Anspruch 5,
**dadurch gekennzeichnet, dass** das Kraftwerk (3) mindestens eine Dampfturbine (5) und einen mit der Dampfturbine (5) verbundenen Kondensator (15) umfasst, und dass der Heizkondensator (20,21,22) dampfbeheizbar und primärseitig mit der Dampfturbine (5) verbunden ist.

## Claims

1. Method for regulating the power output of a combined-cycle power station (3), at least one desired power output value, by means of which at least one regulating device of an energy generator, in particular of a steam generator (10), of the combined-cycle power station (3) is acted upon, being determined from at least one first desired value, which comprises an electrical power output of the power station (1), and from a second desired value (60), which comprises a distance heat power output of the power station (3), and the power station (3) comprising at least one heating condenser (20, 21, 22) for the generation of distance heat, through which a medium to be heated flows from the secondary side, **characterized in that**, to determine the second desired value (60), a heating-steam mass flow, which is calculated with the aid of a mass flow (2013, 2023, 2033), of a forward-flow temperature (2011, 2021), 2031) and return-flow temperature (2012, 2022, 2032) of the medium to be heated with respect to the heating condenser (20, 21, 22), of a heating-steam enthalpy (305) and of a specific heat capacity (307) of the medium to be heated, and also a condensate enthalpy (505) and a turbine degree of utilization (507) and the heating-steam enthalpy (305) are employed.

2. Method according to Claim 1, **characterized in that** the heating condenser (20, 21, 22) is heated on the primary side by heating steam (30) which is extracted from a steam turbine (5) of the power station (3), and **in that** the power station (3) comprises at least one condenser (15), into which expanded steam (50), which leaves the steam turbine (5), is fed.

3. Method according to Claim 1 or 2, **characterized in that**, to determine the second desired value (60) the following formula is employed:

$$\dot{\Delta P_G} \;=\; \dot{m}_{Ent}(h_{Ent} - h_{Kond}) \cdot \varepsilon_T;$$

in which

$$\dot{m}_{Ent} = \frac{\dot{m}_{Heiz}(\vartheta_{VL} - \vartheta_{RL})}{\dfrac{h_{Ent}}{c_W} - \vartheta_{VL}} \, ,$$

and in which $\dot{m}_{Ent}$ represents the heating-steam mass flow, $\dot{m}_{Heiz}$ the mass flow of the medium to be heated, $\vartheta$VL the forward-flow temperature of the medium to be heated, $\vartheta$RL the return-flow temperature of the medium to be heated, hEnt the heating-steam enthalpy, hKond the condensate enthalpy, cW the specific heat capacity of the medium to be heated, $\varepsilon$T the turbine degree of utilization and $\Delta$PG the second desired value.

4. Method according to one of Claims 1 to 3, **characterized in that** the heating-steam enthalpy, the condensate enthalpy, the specific heat capacity of the medium to be heated and the turbine degree of utilization are assumed to be constant.

5. Device (1) for regulating the power output of a combined-cycle power station (3), at least one desired power output value, by means of which at least one regulating device of an energy generator, in particular of a steam generator (10) of the combined-cycle power station (3) is acted upon, being determinable from at least one first desired value, which comprises an electrical power output of the power station (3), and from a second desired value (60), which comprises a distance heat power output of the power station (3), and the power station (3) comprising at least one heating condenser (20, 21, 22) for the generation of distance heat, through which a medium to be heated is capable of flowing on the secondary side, **characterized by** a computing unit (52) for calculating a heating-steam mass flow from the following variables: mass flow (2013, 2023, 2033), forward-flow temperature (2011, 2021, 2031), return-flow temperature (2012, 2022, 2032), heating-steam enthalpy (305) and specific heat capacity (301) of the medium to be heated, which relate to the medium to be heated which is routed through the heating condenser (20, 21, 22), and for determining the second desired value (60) at least from the following variables: heating-steam mass flow, condensate enthalpy (505), turbine degree of utilization (507) and heating-steam enthalpy (305).

6. Device (1) according to Claim 5, **characterized in that** the power station (3) comprises at least one steam turbine (5) and one condenser (15) connected to the steam turbine (5), and **in that** the heating condenser (20, 21, 22) is capable of being steam-heated and is connected to the steam turbine (5) on the primary side.

**Revendications**

1. Procédé de régulation de la puissance d'une centrale ( 3 ) thermique à cycle combiné, dans lequel on détermine au moins une valeur de consigne de puissance, au moyen de laquelle est alimenté au moins un dispositif de régulation d'un générateur d'énergie, notamment d'un générateur ( 10 ) de vapeur, de la centrale ( 3 ) thermique à cycle combiné, à partir d'au moins une première valeur de consigne, qui comprend une puissance électrique de la centrale ( 1 ), et d'une deuxième valeur ( 60 ) de consigne, qui comprend une puissance calorifique à distance de la centrale ( 3 ) et dans lequel la centrale ( 3 ) comprend au moins un condenseur ( 20, 21, 22 ) de chauffage pour la production de chaleur à distance, condenseur dans lequel passe, du côté secondaire, un fluide à chauffer,

**caractérisé en ce que**, pour déterminer la deuxième valeur ( 60 ) de consigne, on tire parti d'un débit massique de vapeur de chauffage qui est calculé en s'aidant d'un débit ( 2013, 2023, 2033 ) massique, d'une température ( 2011, 2021, 2031 ) aller ainsi que d'une température ( 2012, 2022, 2032 ) retour du fluide à chauffer pour ce qui concerne le condenseur ( 20, 21, 22 ) de chauffage, d'une enthalpie ( 305 ) de la vapeur de chauffage et d'une capacité (307) calorifique spécifique du fluide à chauffer, ainsi que d'une enthalpie ( 505 ) du condensat et d'un degré ( 507 ) d'utilisation de la turbine et de l'enthalpie ( 305 ) de la vapeur de chauffage.

2. Procédé suivant la revendication 1,
**caractérisé en ce que** l'on chauffe le condenseur ( 20, 21, 22 ) de chauffage du côté primaire par de la vapeur ( 30 ) de chauffage que l'on prélève d'une turbine ( 5 ) à vapeur de la centrale ( 3 ) et **en ce que** la centrale ( 3 ) comprend au moins un condenseur ( 15 ) que l'on alimente en de la vapeur ( 50 ) détendue qui quitte la turbine ( 5 ) à vapeur.

3. Procédé suivant la revendication 1 ou 2,
**caractérisé en ce que**, pour la détermination de la deuxième valeur ( 60 ) de consigne, on tire parti des formules suivantes :

$$\dot{\Delta P}_G = \dot{m}_{Ent}(h_{Ent} - h_{Kond}) \cdot \varepsilon_T;$$

dans laquelle

$$\dot{m}_{Ent} = \frac{\dot{m}_{Heix}(\vartheta_{VL} - \vartheta_{RL})}{\dfrac{h_{Ent}}{c_W} - \vartheta_{VL}},$$

et
dans lesquelles $\square_{Ent}$ représente le débit massique de la vapeur de chauffage, $\square_{Heix}$ représente le débit massique du fluide à chauffer, $\vartheta_{VL}$ représente la température aller du fluide à chauffer, $\vartheta_{RL}$ représente la température retour du fluide à chauffer, $h_{Ent}$ représente l'enthalpie de chauffage, $h_{kond}$ représente l'enthalpie du condensat, $c_w$ représente la capacité calorifique spécifique du fluide à chauffer, $\varepsilon_T$ représente le degré d'utilisation de la turbine et $\Delta P_G$ représente la deuxième valeur de consigne.

4. Procédé suivant l'une des revendications 1 à 3,
**caractérisé en ce que** l'on suppose constants l'enthalpie de la valeur de chauffage, l'enthalpie du condensat, la capacité calorifique du fluide à chauffer et le degré d'utilisation de la turbine.

5. Dispositif ( 1 ) de régulation de la puisse d'une centrale ( 3 ) thermique à cycle combiné, dans lequel on peut déterminer au moins une valeur de consigne de puissance, au moyen de laquelle au moins un dispositif de régulation d'un générateur d'énergie, notamment d'un générateur ( 10 ) de vapeur de la centrale ( 3 ) à thermique à cycle combiné est alimenté, à partir d'au moins une première valeur de consigne, qui comprend une puissance électrique de la centrale ( 3 ) et d'une deuxième valeur ( 60 ) de consigne, qui comprend une puissance de chaleur à distance de la centrale ( 3 ), dans lequel la centrale ( 3 ) comprend au moins un condenseur ( 20, 21, 22 ) de chauffage pour la production de chaleur à distance, condenseur dans lequel peut passer du côté secondaire un fluide à chauffer,
**caractérisé par**
une unité ( 52 ) de calcul pour calculer un débit massique de vapeur de chauffage à partir des grandeurs débit ( 2013, 2023, 2033 ) massique, température ( 2011, 2021, 2031 ) aller, température ( 2012, 2022, 2032 ) retour, enthalpie ( 305 ) de vapeur de chauffage et capacité ( 307 ) calorifique spécifique du fluide à chauffer, qui se rapporte au fluide à chauffer passant dans le condenseur ( 20, 21, 22 ) de chauffage et, pour la détermination de la deuxième valeur ( 60 ) de consigne, au moins à partir des grandeurs débit massique de la vapeur de chauffage, enthalpie ( 505 ) du condensat, degré ( 507 ) d'utilisation de la turbine et enthalpie ( 305 ) de vapeur de chauffage.

6. Dispositif ( 1 ) suivant la revendication 5,
**caractérisé en ce que** la centrale comprend au moins une turbine ( 5 ) à vapeur et un condenseur ( 15 ) communiquant avec la turbine ( 5 ) à vapeur et **en ce que** le condenseur ( 20, 21, 22 ) de chauffage peut être chauffé par de la vapeur et communique du côté primaire avec la turbine ( 5 ) à vapeur.

FIG 1

EP 1 426 564 B1

FIG 2

EP 1 426 564 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3336596 A1

- DE 19621247 A1